# EUROPEAN PATENT SPECIFICATION

(11) **EP 0 395 080 B1**
(45) Date of publication and mention of the grant of the patent: **17.03.1993**
(21) Application number: 90108015.0
(22) Date of filing: 27.04.1990
(51) Int. Cl.: B01J 19/00, F28D 1/06

(54) **Reactor vessel**
Reaktionsbehälter
Cuve de réacteur

(30) Priority: 28.04.1989 US 344780
(43) Date of publication of application: 31.10.1990
(73) Proprietor: THE B.F. GOODRICH COMPANY, Akron Ohio 44313-1799 (US)
(72) Inventor: Jordan, Robert Edgar, Cleveland, Ohio 44102 (US); Hughes, Michael John, Hinckley, Ohio 44233 (US)
(74) Representative: Selting, Günther, Dipl.-Ing.

(56) References cited:
- FR-A- 2 473 902
- US-A- 4 552 724

## Description

This invention relates to a reaction vessel or tank structure for use in a suspension polymerization for the manufacture of polyvinyl chloride or vinyl chloride.

In the polymerization process there is an excessive heat build up due to the reaction process and it is necessary to remove such heat to control the speed of reaction process. As larger apparatus or vessels are used to more economically provide the end product it has become necessary to use thicker walls to provide the necessary strength to withstand the increase in pressure. However with this increase in size of vessel and wall thickness there is also a substantial increase in the need to more efficiently remove the heat to properly control the reaction process.

The prior art provision of removing heat in the form of cooling tubes within the reactor vessel is unsatisfactory because of the difficulty of cleaning the interior walls of the vessel and the exterior walls of the cooling tubes due to polymer adhesion thereto and the resulting build-up or accumulation thereon. The provision of external cooling jacket encompassing the reactor vessel has presented the problem of not providing sufficient cooling capacity because of the thickness of the vessel wall prevents efficient cooling. The instant invention provides an internal cooling jacket with a thin innermost wall as one continuous surface thereby presenting a smooth inner wall which inhibits the unsatisfactory build-up of polymer adhesion and accumulation.

US-A-4 552 724 describes a reactor vessel comprising an outer shell, an inner sleeve and, between the shell and the sleeve, support members that define a pathway for the flow of coolant between the outer shell and the inner sleeve. The support may either be a strip spirally wound around the inner sleeve or a plurality of longitudinal extending members forming longitudinal passageways for a coolant. The support members are welded to the inner surface of the outer shell and, thereafter, the inner sleeve is formed from a plurality of strip portions welded to the inner edges of the support members and forming a polygonal structure of the inner sleeve. The strips are interconnected among each other by the same welds that connect them to the support members. This does not provide a continuous and smooth inner wall surface which inhibits unsatisfactory build-up of polymere adhesion and accumulation.

FR-A-2 473 902 discloses a reactor vessel having on its outer surface a cooling sheath. Such a reactor vessel has a smooth inner surface but cannot provide sufficient cooling capacity because of the thickness of the vessel wall.

It is an object of the present invention to provide a pressure proof reactor vessel that has excellent cooling capacity and avoids build-up of polymere adhesion and accumulation.

The pressure proof reactor vessel of the present invention has the features as defined in claim 1.

The invention relates further to a method of making a reactor vessel, this method having the features defined in claim 8.

Embodiments of the invention are described hereunder in detail with reference to the drawings, in which
Fig. 1 is a side elevational view partly in cross-section of a reactor vessel;
Fig. 2 is an enlarged sectional view of the circled portion of the reactor vessel shown in Fig. 1;
Fig. 3 is a side elevational view in cross-section of a modified embodiment of the invention similar to the view in Fig. 1;
Fig. 4 is an enlarged cross-sectional view of a portion of the wall of the vessel and the cooling jacket taken on line 4-4 of Fig. 3;
Figs. 5A and 5B are plan views of the assembling of the cooling jacket to the internal wall of the reactor vessel shown in Figs. 1 and 2, showing the vessel wall encompassing and being secured to the jacket;
Figs. 6A and 6B are plan views of a modified construction of a reactor tank and a cooling jacket showing the securing of the cooling jacket to the tank constructed according to the invention shown in Figs. 3 and 4.

### DETAILED DESCRIPTION

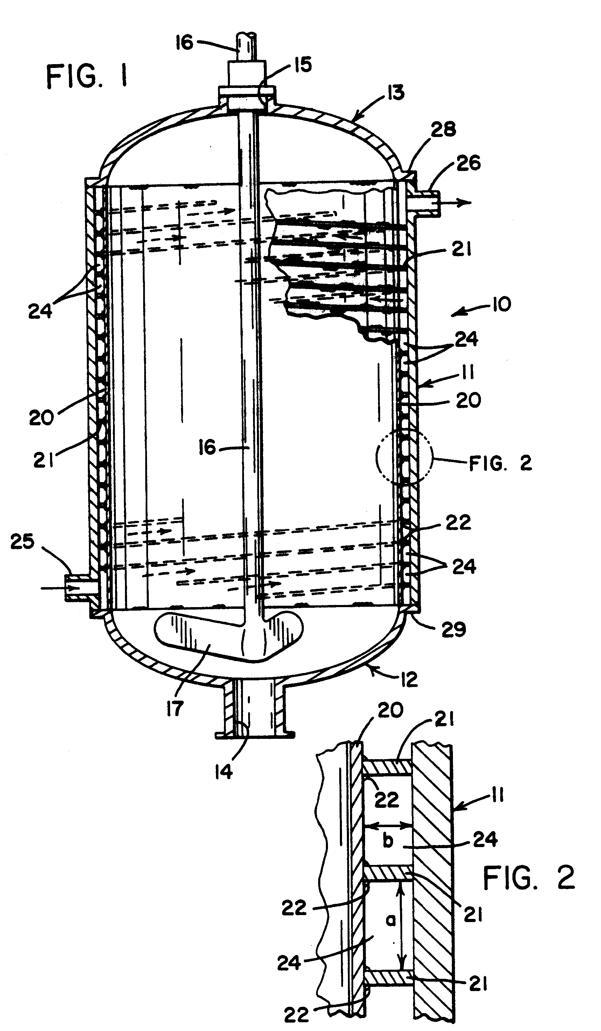

Referring to the drawings wherein like reference numerals designate like or corresponding parts throughout the several views, there is shown in Figs. 1 and 2 a closed reactor vessel 10 having a main cylindrical portion or shell 11 with its lower end closed by a lower semi-spherical or dish-like member 12 and its upper end closed by an upper semi-spherical or dish like member 13. Such dish like members 12 and 13 are suitably welded to the shell or the cylindrical portion 11 to form the closed reactor vessel 10. The lower dish like member 12 has an outlet port 14 which is suitably controlled by a valve means not shown. The upper dish like member 13 has a central opening 15 through which extends a shaft 16 having mounted on its one end a paddle 17 that is suitably rotated to perform a mixing function within the reactor tank. Such upper dish like member 13 also has suitable (manhole) openings not shown for charging or introducing products into the reactor vessel.

An inner jacket is located within such cylindrical portion 11 of the reactor vessel 10 and consists of a thin one piece cylindrical sleeve 20 with a continuous spiral support 21 encircling such sleeve 20 and suitably connected thereto as by welding as at 22 (Fig. 2). Such welding of the spiral support 21 to the sleeve 20 is done to the external or radially outermost wall surface of the sleeve 20. Such support 21 forms a radial partition or wall that is perpendicular to the cylindrical portion 11 and sleeve 20 of the reactor vessel 10. The sleeve 20 and the continuous spiral support 21 may take the form of a strip which is connected to the sleeve 20 in one continuous operation exterior of the vessel 10 prior to its insertion into the cylindrical portion 11. As seen in Figs. 1 and 2, two adjacent supports 21 cooperate with the sleeve 20 and the cylindrical portion 11 of the reactor vessel 10 to define a spiral chamber or passageway 24 that extends from the upper end portion of the reactor vessel spirally to the lower end portion of the reactor vessel. The lower cylindrical portion 11 of the reactor vessel 10 has an inlet 25 connected to the passageway 24 at the lower portion of the reactor vessel while the upper cylindrical portion 11 has an outlet 26 connected to the passageway 24 to provide a continuous flow path for coolant fluid around the entire sleeve 20.

As seen in Fig. 1, the upper and lower dish like members 12 and 13 have an annular flange 28 and 29 respectively that abut the sleeve 20 to provide a seal for the passageway 24. Such juncture of the flanges 28, 29 and the sleeve 20 can be welded to assure a fluid tight fit.

As an example of the dimensions of the passageway formed by the support and sleeve, the vertical distance "a" between two adjacent supports 21 (Fig. 2) can be 2 (5.08 cm) to 3 (7.62 cm) inches while the width or distance "b" of such passageway is between 1/2 inch (1.27 cm) to one inch (2.54 cm) and with the wall thickness of the sleeve 20 approximately .25 inch (.635 cm).

To assemble such reactor vessel, the sleeve 20 is made from a thin piece of metal (thin relative to the thickness of the outer cylindrical shell 11) into a cylinder loop and welded also a single line.

Thereafter a continuous strip or support 21 is welded as at 22 in a spiral path around such cylinder 20. With the chilling of such sleeve 20 along with its support 21 while heating the outer cylindrical portion 11 of the reactor vessel, such sleeve 20 is slipped into the cylindrical portion 11 and then upper and lower dish like members 12 and 13 are secured thereto along with the inlet 25 and outlet 26. With such structure the inner sleeve 20 has the same coefficient of expansion as the cylindrical portion 11 providing a smooth inner cylindrical continuous surface that is resistant to polymer adhesion and build up while also providing an efficient cooling of the reacting medium in the reactor vessel due to the very thinness of the sleeve 20 relative to the thickness of cylindrical portion 11 wherein the thickness of the sleeve 20 is substantially less than the thickness of the outer shell or cylindrical portion 11 of reactor vessel 10, which outer shell can be made of sufficient thickness to withstand the tremendous pressures of the polymerization process. With such inner sleeve 20 made from a one-piece structure the innermost wall surface is smooth and inhibits unsatisfactory polymer build-up.

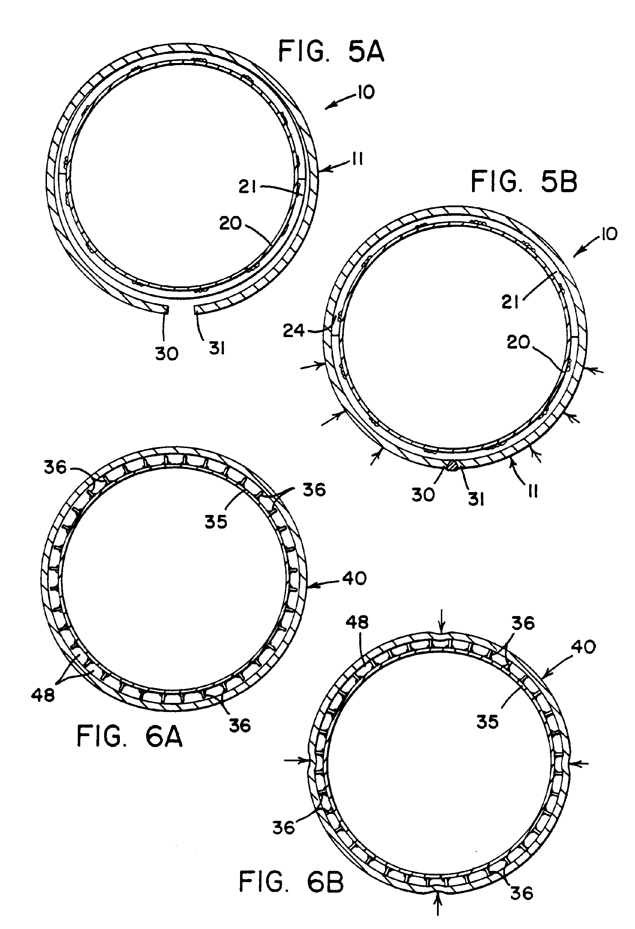

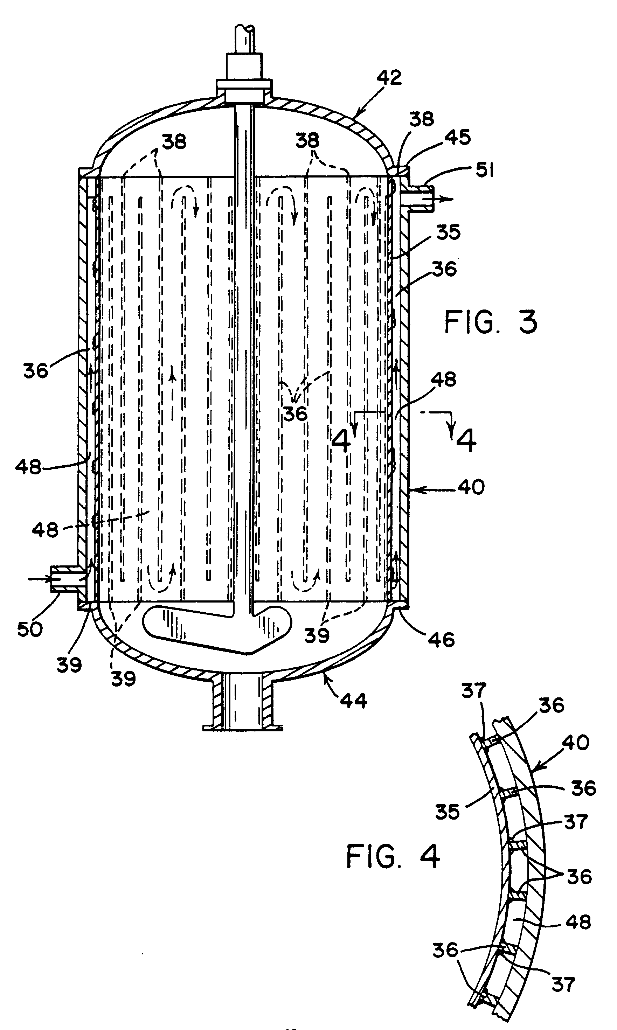

Figs. 5A and 5B illustrate an alternative method of assembling the reactor tank described above. Herein, on completion of the sleeve 20 and support 21 as previously described, the exterior shell 11 is then wrapped around the sleeve 21 with sufficient pressure applied as illustrated in Fig. 5B until the respective ends 30 and 31 of the outer shell closely abut each other after which such ends 30 and 31 are welded to form a unitary whole.

A further embodiment of the reactor vessel is shown in Figs. 3 and 4 wherein a cylindrical sleeve 35 is made from a flat thin rectangular piece of metal such as austenitic-ferritic stainless steel wherein such thin metal sheet is formed into a cylindrical loop and welded. Thereafter thin vertical strips 36 of steel are spot welded as at 37 to the periphery of the cylindrical sleeve 35. In performing this operation, the strips 36 are all of the same length however alternate strips 36 have their one ends (upper ends) 38 located along a plane that is flush with the upper end portion of the sleeve 35 while the remaining alternate strips 36 have their lower ends 39 located along a plane that is flush with the lower end portion of the sleeve 35, thus leaving the respective ends below or above adjacent one ends 38 and 39 to define a serpentine flow path to be described. An outer cylindrical shell 40 of substantial greater thickness than the sleeve 35 is formed around the vertical strips 36. Such shell 40 is formed from a rectangular piece of metal, preferably austro ferric stainless steel, the same metal used to form the sleeve 35 and is formed around the strips into a cylindrical shell and then welded as described in the first embodiment. Thereafter an upper dish like member 42 and a lower dish like member 44 are suitably welded to the respective upper and lower portion of the sleeve 35 and the shell 40. With the annular flanges 45 and 46 on the respective dish like members 42 and 44, and the strips 36 alternating in height, there is formed a continuous serpentine passageway 48 as depicted by Fig. 3.

The lower end of cylindrical shell 40 has an inlet opening 50 communicating directly with passageway 48 while the upper end of cylindrical shell 40 has an outlet opening 51 also communicating with passageway 48 such that with coolant fluid pumped into passageway 48 via inlet opening 50, such coolant flows in a serpentine path around such sleeve 35 and exiting via outlet opening 51. The number of inlet and outlet openings used on the shell 40 can be varied to provide the desired cooling of the reactor tank as discussed above.

A modification of the assembly of such reactor vessel other than described above is to cut a sheet of metal into a rectangular piece or shape and then form such rectangular piece into a cylindrical loop and weld such loop along adjoining or abutting edges. This operation forms a smooth internal surface to the cylinder. Thereafter the thin vertical strips 36 are welded to the external surfaces of the sleeve 35 in the manner and location as described above. The outer cylindrical shell 40 which can be preformed is heated while the internal sleeve 35 with its vertical strips 36 are chilled, after which the heated shell 40 is slipped over the sleeve 35 and then both are brought to the same ambient temperatures and are shown in Fig. 6A. Upper and lower dish like members 42 and 44 are secured to the shell 40. Inlets 50 and 51 are identical as described above and provide the continuous flow path. A further modification of the assembling of such structures is shown in Fig. 6B which discloses that the inside diameter of the outer shell 40 can be slightly larger than the outside diameter of the sleeve 35 with its vertical strips 36 and that after slipping the outer shell 40 over sleeve 35, such shell 40 can be deformed at ninety (90°) degree locations around the vessel to provide a frictional engagement between the components of the shell 40 and the vertical strips 36.

It is preferred that the vessel's inner sleeve and the spiral support or the vertical strip supports along with the outer shell be of high strength Austenitic-Ferritic Stainless Steel although a variation thereon may have the outer shell of conventional carbon steel. Where the vertical strips provide a serpentine flow, there can be four separate zones l.e. four inlet pipes 50 and four outlet pipes 51, with each zone able to pass three hundred gallons(1140 1) of cooling fluid per minute. Austenitic-ferritic stainless steel has a higher thermal and a much higher strength than conventional stainless steel. By electropolishing the inner surface of the sleeve there is less build-up of polymer on the wall surface. The number of separate flow zones used can be varied to achieve a desired cooling result.

## Claims

1. A pressure proof reactor vessel having a cylindrical one-piece outer shell (11;40); a cylindrical inner sleeve (20;35) made from a flat sheet having an interior surface spaced radially inwardly from said outer wall; said inner sleeve (20;35) being concentric to said cylindrical outer shell (11;40); the radial thickness of said inner sleeve being substantially less than the radial thickness of said wall of said outer cylindrical outer shell; support means (21;36) positioned in said space between said cylindrical outer shell and said cylindrical inner sleeve defining a path way (24;48) for the flow of coolant between said outer shell and said inner sleeve; and weld metal (22;37) securing said support to the outer surface of said inner sleeve,
**characterized in that**
said inner sleeve (20;35) consists of a one-piece rectangular piece of metal formed into a cylindrical shell having a smooth continuous interior surface, the ends of said shell being welded together in a lengthwise weld, and said support means (21;36) extends radially from said inner sleeve (20;35) without being welded to said outer shell (11;40).

2. A pressure proof reactor vessel as set forth in claim 1 wherein the wall thickness of said sleeve (20;35) is approximately 0.635 cm.

3. A pressure proof reactor vessel as set forth in claim 1 or 2 wherein said support means (21) is a continuous one-piece spiral member forming said pathway (24) between said shell (11) and said sleeve (20).

4. A pressure proof reactor vessel as set forth in claim 3 wherein the pathway width has a range of from 1.27 cm to 2.54 cm and the height of said pathway has a range of from 3. 81 cm to approximately 7. 62 cm.

5. A pressure proof reactor vessel as set forth in claim 1 or 2 wherein said support means (36) are a plurality of vertical strips welded only to the outer surface of said inner sleeve (35) to form a serpentine pathway (48) for the flow of said coolant.

6. A pressure proof reactor vessel as set forth in claim 5 wherein said reactor vessel (42) has a plurality of inlet ports (50) and a plurality of outlet ports (51) connected to said pathway (48).

7. A pressure proof reactor vessel as set forth in claim 6 wherein said vertical strips define a plurality of separate pathway zones, and each zone has one each of said inlet (50) and outlet ports (51).

8. A method of making a reactor vessel (10) comprising the steps of forming an inner cylindrical sleeve (20;35) from a single continuous sheet of metal with a single lengthwise weld, welding a support (21;36) to the outer wall surface of said inner sleeve, forming an outer cylindrical shell (11;40) around said inner sleeve (20), pressing said inner surface of said shell (11;40) firmly against said support (21;36) to form a flow pathway (24;48) around said inner sleeve in cooperation with said spiral support (21), providing an upper cap (13;42) and a lower dish like member (12;44) to said outer cylindrical shell (11) to form said closed reactor vessel, and providing an inlet (25;50) an outlet (26;51) port to said reactor vessel (10) that communicates with said flow pathway (24;48).

9. A method of making a reactor vessel as set forth in claim 8 wherein the wall thickness of said inner sleeve (20) is substantially less than the wall thickness of said outer shell (11).

10. A method of making a reactor vessel as set forth in claim 9 wherein said inner sleeve (20) with said spiral support (21) is cooled while said outer cylindrical shell (11) is heated prior to assembling of said shell around said inner sleeve.

11. A method of making a reactor vessel as set forth in claim 8, wherein certain spaced portions of the shell (11;40) encompassing the sleeve (20;35) are deformed radially inwardly to firmly and frictionally encompass said metal support (21;36) to make the pathway (24;48) between said sleeve and support means; adhering a cap and a lower member to said cylinder to make a closed vessel; and attaching an inlet and an outlet port to said vessel for connection to said passageway.

12. A method of making a reactor vessel as set forth in claim 8 wherein said support means (21) is a spiral continuous ribbon when attached to said sleeve.

13. A method of making a reactor vessel as set forth in claim 8 wherein said support means (36) is a plurality of vertical strips that are cooperative with said shell (40) and said sleeve (35) to define a serpentine pathway (48) around said sleeve.

## Patentansprüche

1. Druckfester Reaktionsbehälter, der aufweist: einen zylindrischen einstückigen äußeren Mantel (11;40); eine zylindrische innere Hülse (20;35) aus einem flachen Blech mit einer Innerfläche, die radial nach innen von der Außenwand beabstandet ist; wobei die innere Hülse (20;35) konzentrisch zu dem zylindrischen äußeren Mantel (11;40) ist; wobei die radiale Dicke der inneren Hülse wesentlich geringer ist als die radiale Dicke der Wand des äußeren zylindrischen Außenmantels; Stützeinrichtungen (21;36), die in dem Raum zwischen dem zylindrischen äußeren Mantel und der zylindrischen inneren Hülse angeordnet sind und einen Weg (24;48) zum Strömen des Kühlmittels zwischen dem äußeren Mantel und der inneren Hülse bilden; und Schweißmetall (22;37), das die Stütze an der Außenfläche der inneren Hülse befestigt,
**dadurch gekennzeichnet,**
daß die innere Hülse (20;35) aus einem einstückigen rechteckigen, zu einem zylindrischen Mantel mit glatter durchgängiger Innenfläche geformten Metallstück besteht, daß die Erden des Mantels in einer Längsschweißung zusammengeschweißt sind, und daß die Stützeinrichtung (21;36) sich radial von der inneren Hülse (20;35) erstreckt, ohne an den äußeren Mantel (11;40) angeschweißt zu sein.

2. Druckfester Reaktionsbehälter nach Anspruch 1, bei dem die Wanddicke der Hülse (20;35) ungefähr 0,635 cm beträgt.

3. Druckfester Reaktionsbehälter nach Anspruch 1 oder 2, bei dem die Stützeinrichtung (21) ein durchgängiges einstückiges Wendelteil ist, das den Weg (24) zwischen dem Mantel (11) und der Hülse (20) bildet.

4. Druckfester Reaktionsbehälter nach Anspruch 3, bei dem die Breite des Weges in einem Bereich zwischen 1,27 cm und 2,54 cm und die Höhe des Weges in einem Bereich zwischen 3,81 cm und ungefähr 7,62 cm liegt.

5. Druckfester Reaktionsbehälter nach Anspruch 1 oder 2, bei dem die Stützeinrichtung (36) in Form mehrerer vertikaler Streifen ausgebildet ist, die nur an die Außenfläche der inneren Hülse (35) angeschweißt sind, derart, daß sie einen serpentinenförmigen Weg (48) für das Strömen des Kühlmittels bilden.

6. Druckfester Reaktionsbehälter nach Anspruch 5, bei dem der Reaktionsbehälter (42) mehrere Einlaßöffnungen (50) und mehrere Auslaßöffnungen (51) aufweist, die mit dem Weg (48) verbunden sind.

7. Druckfester Reaktionsbehälter nach Anspruch 6, bei dem die vertikalen Streifen mehrere separate Wegzonen bilden und jede Zore jeweils eine Einlaßöffnung (50) und eine Auslaßöffnung (51) aufweist.

8. Verfahren zur Herstellung eines druckfesten Reaktionsbehälters (10) mit den folgenden Schritten: Formen einer inneren zylindrischen Hülse (20;35) aus einem einzigen durchgängigen Metallblech mit einer einzigen Längsschweißung, Anschweißen einer Stütze (21;36) an die Außenwandfläche der inneren Hülse, Formen eines äußeren zylindrischen Mantels (11;40) um die innere Hülse (20) herum, festes Drücken der Innenfläche des Mantels (11;40) gegen die Stütze (21;36) zum Bilden eines Strömungswegs (24;48) um die innere Hülse im Zusammenwirken mit der wendelförmigen Stütze (21), Vorsehen eines oberen Deckels (13;42) und eines unteren tellerähnlichen Teils (12;44) an dem äußeren zylindrischen Mantel (11) zur Bildung des geschlossenen Reaktionsbehälters, und Vorsehen einer Einlaß- (25;50) und einer Auslaßöffnung (26;51) an dem Reaktionsbehälter (10), die mit dem Strömungsweg (24;48) in Verbindung stehen.

9. Verfahren zur Herstellung eines Reaktionsbehälters nach Anspruch 8, bei dem die Wanddicke der inneren Hülse (20) wesentlich geringer ist als die Wanddicke des äußeren Mantels (11).

10. Verfahren zur Herstellung eines Reaktionsbehälters nach Anspruch 9, bei dem die innere Hülse (20) mit der wendelförmigen Stütze (21) gekühlt wird, während der äußere zylindrische Mantel (11) vor dem Montieren des Mantels um die innere Hülse erwärmt wird.

11. Verfahren zur Herstellung eines Reaktionsbehälters nach Anspruch 8, bei dem bestimmte voneinander beabstandete Bereiche des die Hülse (20;35) umgebenden Mantels (11;40) radial nach innen verformt werden, um die Metallstütze (21;36) fest und reibschlüssig zu umschließen, um den Weg (24;48) zwischen der Hülse und der Stützeinrichtung zu bilden; wobei ein Deckel und ein unteres Teil an dem Zylinder anhängen und so einen geschlossenen Behälter bilden; und wobei eine Einlaß- und eine Auslaßöffnung zur Verbindung mit diesem Durchlaß an dem Behälter angebracht sind.

12. Verfahren zur Herstellung eines Reaktionsbehälters nach Anspruch 8, bei dem die Stützeinrichtung (21) bei Anbringung an der Hülse ein wendelförmiges durchgängiges Band ist.

13. Verfahren zur Herstellung eines Reaktionsbehälters nach Anspruch 8, bei dem die Stützeinrichtung (36) in Form mehrerer vertikaler Streifen ausgebildet ist, die mit dem Mantel (40) und der Hülse (35) zur Bildung eines serpentinenförmigen Wegs (48) um die Hülse zusammenwirken.

## Revendications

1. Une cuve de réacteur résistant à la pression comprenant une enveloppe extérieure cylindrique d'un seul tenant (11; 40); un manchon intérieur cylindrique (20; 35) en tôle plate pourvue d'une surface intérieure radialement espacée vers l'intérieur par rapport à ladite paroi extérieure; ledit manchon intérieur (20; 35) étant concentrique à ladite enveloppe cylindrique extérieure (11; 40); l'épaisseur radiale dudit manchon intérieur étant sensiblement moindre que l'épaisseur radiale de ladite paroi de ladite enveloppe cylindrique extérieure; un moyen de support (21; 36), positionné dans ledit espace entre ladite enveloppe cylindrique extérieure et ledit manchon cylindrique intérieur, définissant pour l'écoulement d'agent de refroidissement un trajet (24; 48) entre ladite enveloppe extérieure et ledit manchon intérieur; et un métal de soudure (22; 37) fixant ledit support à la surface extérieure dudit manchon intérieur,
**caractérisée en ce que**
ledit manchon intérieur (20; 35) consiste en un élément rectangulaire métallique d'un seul tenant formé en une enveloppe cylindrique à surface intérieure continue lisse, les extrémités de ladite enveloppe étant soudées entre elles selon une soudure longitudinale, et ledit moyen de support (21; 36) s'étend radialement depuis ledit manchon intérieur (20; 35) sans être soudé à ladite enveloppe extérieure (11; 40).

2. Une cuve de réacteur résistant à la pression selon la revendication 1, dans laquelle l'épaisseur de paroi dudit manchon (20; 35) est d'environ 0,635 cm.

3. Une cuve de réacteur résistant à la pression selon la revendication 1 ou 2, dans laquelle ledit moyen de support (21) est un organe continu hélicoïdal d'un seul tenant formant ledit trajet (24) entre ladite enveloppe (11) et ledit manchon (20).

4. Une cuve de réacteur résistant à la pression selon la revendication 3 dans laquelle la largeur du trajet est comprise entre 1,27 cm et 2,54 cm et la hauteur du trajet est comprise entre 3,81 cm et environ 7,62 cm.

5. Une cuve de réacteur résistant à la pression selon la revendication 1 ou 2, dans laquelle ledit moyen de support (36) consiste en plusieurs bandes verticales soudées seulement à la surface extérieure dudit manchon intérieur (35) afin de former un trajet en serpentin (48) pour l'écoulement dudit agent de refroidissement.

6. Une cuve de réacteur résistant à la pression selon la revendication 5 dans laquelle ladite cuve de réacteur (42) comprend plusieurs orifices d'entrée (50) et plusieurs orifices de sortie (51) reliés audit trajet (48).

7. Une cuve de réacteur résistant à la pression selon la revendication 6 dans laquelle lesdites bandes verticales définissont plusieurs zones séparées de trajet, et chaque zone comprend l'un desdits orifices d'entrée (50) et l'un desdits orifices de sortie (51).

8. Un procédé de fabrication d'une cuve de réacteur (10) comprenant les étapes consistant à former au moyen d'une soudure longitudinale unique un manchon cylindrique intérieur (20; 35) à partir d'une tôle métallique unique continue, souder un support (21; 36) à la surface de paroi extérieure dudit manchon intérieur, former une enveloppe cylindrique (11; 40) autour dudit manchon intérieur (20), appuyer fermement ladite surface intérieure de ladite enveloppe (11; 40) contre ledit support (21; 36) afin de former en coopération avec ledit support hélicoïdal (21) un trajet d'écoulement (24; 48) autour dudit manchon intérieur pourvoir ladite enveloppe cylindrique extérieure (11) d'un couvercle supérieur (18; 42) et d'un organe inférieur (12; 44) en forme d'assiette afin de former ladite cuve fermée de réacteur, et ménager pour ladite cuve du réacteur (20) un orifice d'entrée (25; 50) et un orifice de sortie (26; 51) qui communiquent avec ledit trajet d'écoulement (24; 48).

9. Un procédé de fabrication d'une cuve de réacteur selon la revendication 8 dans lequel l'épaisseur de paroi dudit manchon intérieur (20) est sensiblement moindre que l'épaisseur de paroi de ladite enveloppe extérieure (11).

10. Un procédé de fabrication d'une cuve du réacteur selon la revendication 9 dans lequel ledit manchon intérieur (20) pourvu dudit support hélicoïdal (21) est refroidi tandis que ladite enveloppe cylindrique extérieure (11) est chauffée avant l'assemblage de ladite enveloppe autour dudit manchon intérieur.

11. Un procédé de fabrication d'une cuve du réacteur selon la revendication 8, dans lequel certaines parties espacées de l'enveloppe (11; 40) qui entoure le manchon (20; 35) sont déformées radialement vers l'intérieur afin de saisir de façon ferme et avec frottement ledit support métallique (21; 36) afin de constituer le trajet (24; 48) entre ledit manchon et ledit moyen de support; faire adhérer sur ledit cylindre un couvercle et un organe inférieur afin de fabriquer une cuve fermée, et attacher un orifice d'entrée et un orifice de sortie à ladite cuve en vue d'un raccordement audit passage.

12. Un procédé de fabrication d'un cuve du réacteur selon la revendication 8 dans lequel ledit moyen de support (21) est un ruban continu hélicoïdal lorsqu'il est attaché audit manchon.

13. Un procédé de fabrication d'une cuve du réacteur selon la revendication 8 dans lequel ledit moyen de support (36) consiste en plusieurs bandes verticales qui coopèrent avec ladite enveloppe (40) et ledit manchon (35) afin de définir un trajet en serpentin (48) autour dudit manchon.
